# EUROPÄISCHE PATENTSCHRIFT

(11) **EP 0 882 175 B1**
(45) Veröffentlichungstag und Bekanntmachung des Hinweises auf die Patenterteilung: **14.04.2004**
(21) Anmeldenummer: 97914140.5
(22) Anmeldetag: 12.02.1997
(51) Int. Cl.: F01D 25/18, F16N 7/36, F16N 31/00

(54) **EINRICHTUNG UND VERFAHREN ZUR ABFÜHRUNG EINES FLÜSSIGEN SCHMIERMITTELS AUS EINER LAGERANORDNUNG**
DEVICE AND PROCESS FOR DRAINING LIQUID LUBRICANT FROM A BEARING ARRANGEMENT
DISPOSITIF ET PROCEDE POUR EVACUER UN LUBRIFIANT LIQUIDE D'UN ENSEMBLE PALIER

(30) Priorität: 19.02.1996 DE 19606088
(43) Veröffentlichungstag der Anmeldung: 09.12.1998
(73) Patentinhaber: SIEMENS AKTIENGESELLSCHAFT, 80333 München (DE)
(72) Erfinder: OEYNHAUSEN, Heinrich, D-45475 Mülheim an der Ruhr (DE)
(86) Internationale Anmeldenummer: PCT/DE1997/000262
(87) Internationale Veröffentlichungsnummer: WO 1997/030273

(56) Entgegenhaltungen:
- EP-A- 0 306 634
- WO-A-94/01713
- DE-C- 378 896
- GB-A- 2 111 608

## Beschreibung

Die Erfindung betrifft eine Einrichtung zur Abführung eines flüssigen Schmiermittels, insbesondere Lageröl, aus einer Lageranordnung für eine um eine Achse rotierende Welle. Die Lageranordnung weist ein mit Schmiermittel zu beaufschlagendes, die Welle lagerndes Lager, zumindest eine dem Lager benachbarte die Welle umringende Dichtung und einen einem ersten Ende des Lagers zugeordneten, die Welle umringenden Sammelraum aufweist, durch welchen Sammelraum das an dem ersten Ende ausgetretene Schmiermittel auffangbar und ableitbar ist, wobei geodätisch unterhalb des Lagers ein Schmiermittelsumpfraum vorgesehen ist, welcher mit einem Schmiermittelablauf verbunden ist, und der Sammelraum einen durch den Schmiermittelsumpfraum zu dem Schmiermittelablauf führenden Umlenkkanal zur beschleunigten Ableitung des Schmiermittels aufweist. Die Erfindung betrifft weiterhin ein Verfahren zur Abführung eines flüssigen Schmiermittels aus einer Lageranordnung für eine um eine Achse rotierende Welle, welche Lageranordnung ein mit dem Schmiermittel beaufschlagte, die Welle lagerndes Lager, zumindest eine dem Lager benachbarte die Welle umringende Dichtung, und einen einem ersten Ende des Lagers zugeordneten, die Welle umringenden Sammelraum aufweist, durch welchen Sammelraum das an dem ersten Ende austretende Schmiermittel aufgefangen und abgeleitet wird, wobei das aus dem Sammelraum über einen durch einen geodätisch unterhalb des Lagers liegenden Schmiermittelsumpfraum führenden Umlenkkanal das Schmiermittel einem Schmiermittelablauf beschleunigt zugeführt wird.

Die Erfindung bezieht sich insbesondere auf Gleitlageranordnungen in Turbinenanlagen, insbesondere in Dampfturbinenanlagen. Gleitlageranordnungen, welche in Turbinenanlagen verwendbar sind, sowie ein Verfahren und eine Einrichtung zur Abführung flüssiger Schmiermittel, insbesondere Schmieröl, aus solchen Gleitlageranordnungen, gehen beispielsweise aus der EP 0 306 634 A2 sowie aus der WO 94/01713 A1 hervor.

In der EP 0 306 634 A2 ist eine berührungsfreie Wellendichtung mit Lecköl-Abführung beschrieben, die bei einem Gleitlager für Turbomaschinen, insbesondere Dampfturbinen in einem weiten Drehzahlbereich, angefangen vom Stillstand über die Turndrehzahl bis hin zur Betriebsdrehzahl (z.B. 3000 U/min) eine zügig Abführung des von den Gleitlagerflächen abströmenden Lageröls gewährleistet. Hierzu ist eine Einrichtung mit einem Ölsammel-Ringkanal vorgesehen, der auf einem Bogenstück in Form eines schlitzförmigen Öffnungsbogens ausgespart ist, so dass der Öffnungsbogen einen Umfangswinkelbereich der Welle überstreicht, der beim geodätisch tiefsten Punkt der Ringkanal-Außenkontur beginnt und sich in Wellendrehrichtung gesehen höchstens bis zur Lagerschalen-Teilfuge des Ölsammel-Ringkanals erstreckt. Für eine Abführung von in eine Dichtung des Gleitlagers eingedrungenem Lecköl, ist geodätisch unterhalb der Dichtung eine Lecköl-Sammelkammer angeschweißt. Diese mündet über axial orientierte Absaugbohrungen in einen Sog erzeugende Treibdüsen, welche sich in Form von Saughütchen im Ölablauf des Ölsammel-Ringkanals befinden. Hierdurch soll auch in einem gewissen Umfang eine Abführung von Lecköl aus den den Gleitlagern zugeordneten Dichtungen erreicht werden.

In der WO 94/01713 A1 sind ein Verfahren und eine Einrichtung zur Abführung von Schmiermittel, insbesondere Lageröl, aus einer Lageranordnung, insbesondere einem Stirnlager einer Dampfturbine, angegeben. Dem Stirnlager ist hierbei eine eine Turbinenwelle umringende Dichtung zugeordnet. Zwischen diesen ist ein die Welle umringender Sammelraum vorgesehen, in den das entlang der Welle aus dem Lager austretende Schmiermittel einströmt und aus dem es abgeführt wird. Das Schmiermittel wird ohne wesentlichen Geschwindigkeitsverlust aus dem Sammelraum abgeführt. Durch eine Injektionsleitung wird das Lageröl einer Abflussleitung zugeführt. Die Anordnung aus Injektionsleitung und Abflussleitung bildet eine eine Sogwirkung erzeugende Strahlpumpe.

Aufgabe der Erfindung ist es, eine Einrichtung zur Abführung eines flüssigen Schmiermittels aus einer einer Lageranordnung benachbarten, eine um eine Achse rotierende Welle umringenden Dichtung anzugeben, wobei die Lageranordnung ein mit dem Schmiermittel zu beaufschlagendes, die Welle lagerndes Lager aufweist, und in die Dichtung eindringendes Schmiermittel mit geringem apparativen Aufwand beschleunigt abgeführt werden soll. Eine weitere Aufgabe besteht darin, ein entsprechendes Verfahren zur beschleunigten Abführung eines in die Dichtung eindringenden flüssigen Schmiermittels anzugeben.

Erfindungsgemäß wird die auf eine Einrichtung gerichtete Aufgabe dadurch gelöst, dass bei einer Lageranordnung mit zumindest eine dem Lager benachbarte die Welle umringende Dichtung und einem einem ersten Ende des Lagers zugeordneten, die Welle umringenden Sammelraum, durch welchen Sammelraum das an dem ersten Ende austretende Schmiermittel auffangbar und ablassbar ist, ein geodätisch unterhalb des Lagers angeordneter Schmiermittelsumpfraum vorgesehen ist, welcher mit einem Schmiermittelablauf verbunden ist, und wobei der Sammelraum einen durch den Schmiermittelsumpfraum führenden Umlenkkanal zur beschleunigten Ableitung des Schmiermittels in den Schmiermittelablauf aufweist, wobei die Dichtung ein Dichtungsgehäuse, in dem ein Absaugraum vorgesehen ist, und zumindest zwei einen Zwischenraum bildende die Welle umringende Dichtungsbänder aufweist, welcher Zwischenraum strömungstechnisch mit dem Absaugraum verbunden ist, wobei der Absaugraum mit einer Absaugleitung verbunden ist, welche durch den Schmiermittelsumpfraum führt und in den Schmiermittelablauf mündet, wobei der Querschnitt des Schmiermittelablaufs durch die Absaugleitungen verengt ist.

Hierbei wird der Impuls des austretenden Schmiermittels, insbesondere eines Lageröls, ausgenutzt. Das Schmiermittel erhält bei Austritt aus dem Lager einen Impuls, da es von der rotierenden Welle tangential abgeschleudert wird. Hierdurch hat das austretende Schmiermittel eine hohe Geschwindigkeit in tangentialer Richtung. Diese Geschwindigkeit wird durch den Umlenkbogen weitgehend aufrechterhalten, so dass ein beschleunigter Abfluss des Schmiermittels aus dem Sammelraum gegeben ist. Der Sammelraum mit dem sich daran anschließenden Umlenkbogen wirkt zusammen mit dem Schmiermittelablauf wie ein Injektor und beschleunigt das an einem zweiten dem ersten Ende gegenüberliegenden Ende des Lagers austretende Schmiermittel. Dieses strömt unmittelbar in den Schmiermittelsumpfraum, welcher insbesondere durch das Gehäuse des Lagers gebildet ist. In dem Schmiermittelsumpfraum bildet sich bei einem normalen Betrieb der Welle bei funktionierender Schmiermittelzuführung zur Lageranordnung ein Schmiermittelsumpf aus. Durch die beschleunigte Abführung des Schmiermittels ist bei rotierender Welle gewährleistet, dass das Niveau des Schmiermittelsumpfes geodätisch unterhalb der Dichtung liegt. Somit ist ein Einströmen von Schmiermittel aus dem Schmiermittelsumpf in die Dichtung wirksam verhindert. In einer Dampfturbine, bei der sich außerhalb der Dichtung ein mit einem Kondensator verbundener Luftraum anschließt, ist ein unerwünschtes Eindringen von Öl in den Kondensator wirksam verhindert.

Für eine Absaugung von in die Dichtung eindringendem Schmiermittel ist direkt in dem Gehäuse der Dichtung ein Absaugraum vorgesehen, welcher strömungstechnisch mit einem durch zwei benachbarte die Welle umringende Dichtungsbänder gebildeten Zwischenraum verbunden ist. Eine strömungstechnische Verbindung ist vorzugsweise durch eine Anzahl von Bohrungen in dem Dichtungsgehäuse hergestellt. Hierdurch ist ein Abfluss von in den Zwischenraum eingedrungenem Lageröl erreicht. Die Dichtung verfügt vorzugsweise über eine Mehrzahl von Dichtungsbändern und somit entlang der Achse der Welle über eine Mehrzahl an Zwischenräumen, die jeweils mit dem Absaugraum strömungstechnisch verbunden sind.

Der Absaugraum ist mit einer Absaugleitung verbunden, welche durch den Schmiermittelsumpfraum führt und in den Schmiermittelablauf mündet, so dass dessen Querschnitt durch die Absaugleitung verengt ist. Infolge dieser vorzugsweise leichten Querschnittsverengung wird örtlich in dem Schmiermittelablauf ein zusätzlicher geringer Unterdruck erzeugt. Dieser Unterdruck begünstigt den Ablauf des in die Dichtung eingedrungenen Schmiermittels. Diese durch den Unterdruck selbsttätig funktionierende Absaugung von Schmiermittel aus der Dichtung funktioniert selbst dann, wenn eine Absaugung von Schmiermitteldunst aus dem Lagergehäuse ausfallen sollte. Es ist somit eine Sicherheit gegenüber Austritt von Schmiermittel aus einem Lager, insbesondere einem Gleitlager in einem sich an die Dichtung anschließenden Abdampfraum einer Dampfturbinenanlage, gegeben. Hierdurch ist auch eine den Wirkungsgrad der Dampfturbine verringernde Benetzung eines mit dem Abdampfraum verbundenen Kondensators mit Schmiermittel sicher vermieden. Die Absaugung des in die Dichtung eingetretenen Schmiermittels ist gegenüber einer Lageranordnung, bei der das Schmiermittel lediglich in Folge der Gravitationswirkung aus dem Lager abfließt, durch den als Injektor wirkenden Sammelraum mit Umlenkbogen beschleunigt.

Das zweite Ende des Lagers ist vorzugsweise so ausgebildet, dass eine unmittelbare strömungstechnische Verbindung zu dem Schmiermittelsumpfraum besteht. Hierdurch kann ein ungehinderter durch den als Injektor wirkenden Sammelraum des ersten Ende beschleunigter Abfluss des Schmiermittels in den Schmiermittelsumpfraum erfolgen, wodurch eine unerwünschte Verteilung des Schmiermittels innerhalb der Lageranordnung, insbesondere ein Eindringen in eine Dichtung der Lageranordnung weitgehend vermieden wird.

Eine unerwünschte Verteilung von aus dem zweiten Ende austretenden Schmiermittel wird vorzugsweise durch einen dem zweiten Ende benachbarten Sammelraum zur Aufnahme und zur Ableitung von Schmiermittel gewährleistet, wobei der Sammelraum einen unmittelbaren Abfluss des Schmiermittels in den Schmiermittelsumpfraum gewährleistet.

Vorzugsweise ist das Lager zwischen der Dichtung und dem als Injektor dienenden Sammelraum angeordnet, wodurch eine beschleunigte Abführung des aus dem Lager in Richtung der Dichtung austretenden Schmiermittels gewährleistet ist, so dass ein Eindringen von Schmiermittel in die Dichtung weitgehend vermieden ist.

Der Absaugraum weist vorzugsweise zumindest eine in das Dichtungsgehäuse eingebrachte Bohrung auf, welche insbesondere in axialer Richtung verläuft. Je nach den möglicherweise zu erwartenden in die Dichtung eindringenden Mengen an Schmiermittel erfolgt eine Bestimmung der einzubringenden Bohrungen, wobei auch die thermomechanische Belastbarkeit des Dichtungsgehäuses Berücksichtigung findet.

Vorzugsweise eignet sich die Einrichtung zur Ertüchtigung einer Lageranordnung, insbesondere einer Gleitlageranordnung, in einer Turbinenanlage, insbesondere einer Dampfturbinenanlage. Die Einrichtung ist besonders geeignet zur Anwendung in hochbelasteten Turbinenanlagen in Kraftwerken und dergleichen; besonders eignet sie sich zur Ertüchtigung einer Gleitlageranordnung in einem Stirnlager einer Turbinenanlage, welches Stirnlager in einen von Dampf erfüllten Dampfraum der Turbinenanlage angeordnet ist. Eine Lageranordnung kann selbstverständlich weitere Komponenten neben den bisher erwähnten aufweisen. In vielen Dampfturbinen sind die Dichtungen in Lageranordnungen mehrteilig und/oder strukturiert ausgeführt. So liegen, entlang der Welle gesehen, zwischen dem Inneren einer Turbine und dem Lager vielfach mehrerer Dichtabschnitte, zwischen denen Räume angeordnet sind, die je nach Ausgestaltung und Funktion mit Dampf beaufschlagt, evakuiert oder belüftet werden. Dies bedingt in jeder Teildichtung einen Leckstrom mit bestimmten Eigenschaften, insbesondere definierter Größe, definierter Richtung und definierter Zusammensetzung, entstehen zu lassen und diese Leckströme an Schmiermittel an bestimmten Stellen aus der Dichtung auszuleiten und einer ihrer jeweiligen Zusammensetzung entsprechenden weiteren Behandlung zuführen zu können.

Die auf das Verfahren hin gerichtete Aufgabe wird gelöst durch ein Verfahren zur Abführung eines flüssigen Schmiermittels aus einer Lageranordnung für eine um eine Achse rotierende Welle, welche Lageranordnung ein mit dem Schmiermittel beaufschlagte, die Welle lagerndes Lager, zumindest eine dem Lager benachbarte die Welle umringende Dichtung, und einen einem ersten Ende des Lagers zugeordneten, die Welle umringenden Sammelraum aufweist, durch welchen Sammelraum das an dem ersten Ende austretende Schmiermittel aufgefangen und abgeleitet wird, wobei das aus dem Sammelraum über einen durch einen geodätisch unterhalb des Lagers liegenden Schmiermittelsumpfraum führenden Umlenkkanals Schmiermittel einem Schmiermittelablauf beschleunigt zugeführt wird, wobei das Schmiermittel aus einem zwischen zwei Dichtungsbändern der Dichtung gebildeten Zwischenraum in den Absaugraum und von dort über ein durch den Schmiermittelsumpfraum führende Absaugleitung in den Schmiermittelablauf geleitet wird.

Durch einen mit einem Umlenkkanal versehenen Sammelraum, der die hohe tangentiale Strömungsgeschwindigkeit des austretenden Schmiermittels ausnutzt, wird eine beschleunigte Abführung des Schmiermittels erreicht. Der Umlenkbogen mündet vorzugsweise in vertikaler Richtung in einen vertikal verlaufenden Schmiermittelablauf, welcher Ablauf mit dem teilweise mit Schmiermittel gefüllten Schmiermittelsumpfraum verbunden ist. Der durch den Schmiermittelsumpfraum hindurchführende in den Schmiermittelabfluss mündende Umlenkbogen erzeugt in dem Schmiermittelabfluss einen Unterdruck, durch den ein beschleunigter Abfluss von Schmiermittel aus dem Schmiermittelsumpfraum erfolgt. Hierdurch wird das Niveau des Schmiermittels in dem Schmiermittelsumpfraum geodätisch unterhalb der Dichtung gehalten, so dass kein Schmiermittel aus dem Schmiermittelsumpf in die Dichtung eindringt und diese durchströmt.

Der Schmiermittelsumpfraum wird durch aus einem zweiten dem ersten Ende entlang der Achse gegenüberliegenden Ende des Lagers austretendem Schmiermittel, insbesondere Lageröl, gefüllt. Die Zufuhr an austretendem Schmiermittel ist durch eine freie strömungstechnische Verbindung zwischen dem zweiten Ende und dem Schmiermittelsumpfraum gewährleistet. Hierfür kann ein weiterer die Welle umringender Sammelraum vorgesehen sein, aus welchem das Schmiermittel in den Schmiermittelsumpfraum strömt.

Das in einen zwischen zwei Dichtungsbändern der Dichtung gebildeten Zwischenraum eindringende Schmiermittel wird in einen in dem Gehäuse der Dichtung liegenden Absaugraum, insbesondere eine axiale Bohrung, geleitet und strömt von dort über eine durch den Schmiermittelsumpfraum führende Absaugleitung in den Schmiermittelablauf. Durch die in dem Schmiermittelablauf mündende Absaugleitung wird ein zusätzlicher Unterdruck erzeugt, welcher einer beschleunigten Abführung des in die Dichtung eingedrungenen Schmiermittels bedingt.

Anhand der in der Zeichnung dargestellten Ausführungsbeispiele werden die erfindungsgemäße Einrichtung und das Verfahren näher erläutert. Es zeigen in teilweise schematisierter Darstellung:
- FIG 1: eine Lageranordnung eines Stirnlagers einer Dampfturbine in einem Längsschnitt entlang einer Achse einer Turbinenwelle und
- FIG 2: einen vergrößerten Ausschnitt gemäß FIG 1 im Bereich der Dichtung.

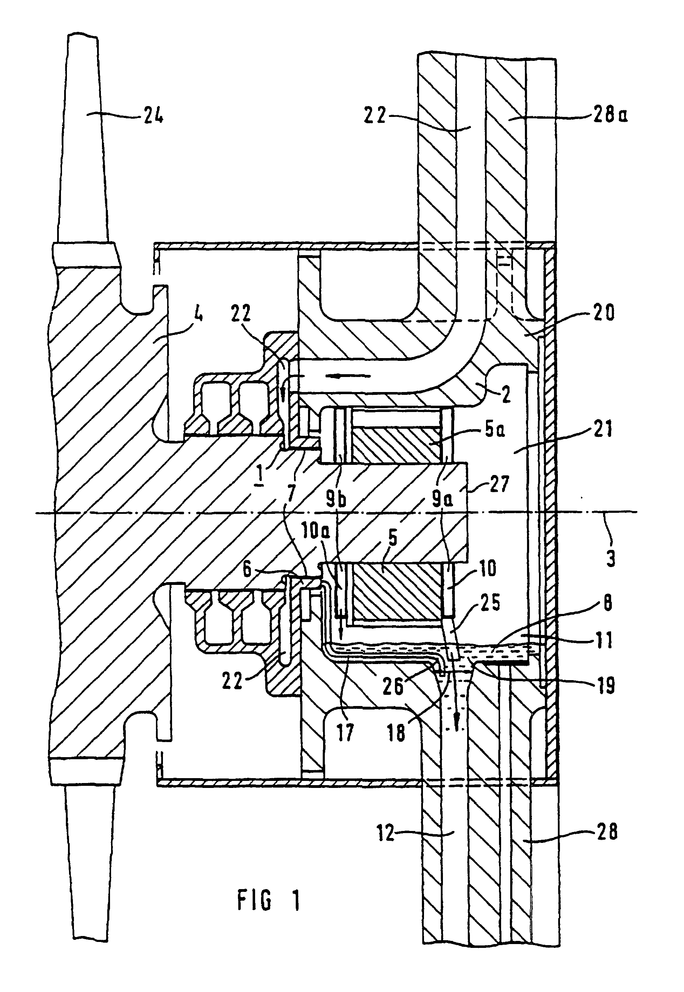

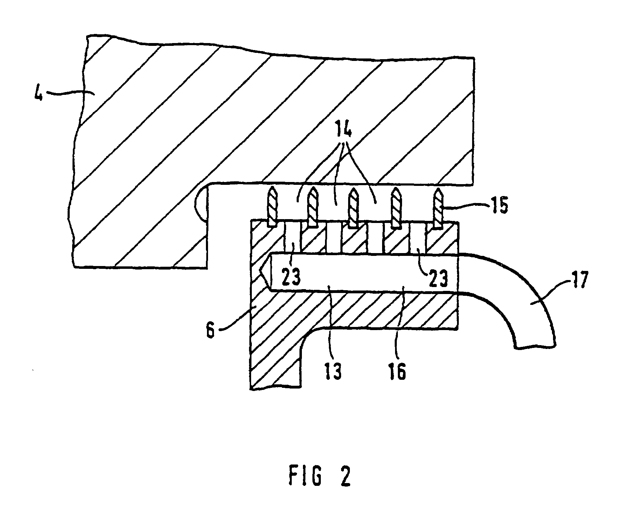

In FIG 1 ist eine sich entlang einer Achse 3 erstreckende Dampfturbinenwelle 4 in einem Endbereich dargestellt. Die Turbinenwelle 4 ist durch eine Lageranordnung 2 umfassend ein als Gleitlager ausgebildetes Lager 5, welches von einem Lagergehäuse 20 umgeben ist, und eine das Lagergehäuse 20 an der Welle 4 abdichtende Dichtung 7, gelagert. Die Lageranordnung 2 weist eine Einrichtung 1 zur Abführung von Schmiermittel 8, insbesondere Lageröl, aus dem Lagergehäuse 20 hinaus auf. Dichtung 7 sowie Lager 5 umringen die Turbinenwelle 4 kreiszylindrisch. Das Lager 5 weist eine nichtdargestellte Schmiermittelzuführung auf, durch die während eines normalen Betriebes der Dampfturbinenanlage Schmiermittel 8 dem Lager 5 zugeführt wird. Das Schmiermittel 8 tritt an einem ersten Ende 9a, welches der Stirnseite 27 der Turbinenwelle 4 zugeordnet ist, sowie aus einem zweiten Ende 9b, welches der Dichtung 7 zugewandt ist, aus. Unmittelbar an dem ersten Ende 9a ist ein Sammelraum 10 zur Aufnahme des mit hoher tangentialer Geschwindigkeit aus dem Lager 5 austretenden Schmiermittel 8 angeordnet, welcher einen Umlenkkanal 25 an seinem geodätisch tiefstliegenden Punkt hat, durch den das Schmiermittel 8 abgeleitet wird. Der Umlenkkanal 25 ist durch einen geodätisch unterhalb des Lagers 5 liegenden Schmiermittelsumpfraum 11 im wesentlichen vertikal hindurch geführt und mündet an einem im wesentlichen vertikal verlaufenden Schmiermittelablauf 12. Der Schmiermittelablauf 12 ist in einem Träger 28 des Lagergehäuses 20 eingegossen. Der Schmiermittelablauf 12 erstreckt sich unmittelbar von dem Schmiermittelsumpfraum 11 geodätisch nach unten. An dem zweiten Ende 9b ist ebenfalls ein Sammelraum 10a zur Aufnahme und Ableitung des aus dem zweiten Ende 9b austretenden Schmiermittels 8 vorgesehen. Der Sammelraum 10a gewährleistet ein im wesentlichen ungehindertes Abströmen des Schmiermittels 8 in den Schmiermittelsumpfraum 11, welcher hierdurch während des normalen Betriebes der Dampfturbinenanlage bis zu einem entsprechenden geodätisch unterhalb der Dichtung 7 liegenden Pegel mit Schmiermittel 8, insbesondere Lageröl, gefüllt ist. Das Lagergehäuse 20, welches ein Stirnlager 5a umgibt, ist in einem Dampfraum der Dampfturbinenanlage, insbesondere einem Abdampfstutzen, angeordnet. Die Lageranordnung 2 ist über die Träger 28, 28a in dem Dampfraum gehalten, wobei einer oder mehrere der Träger 28 hohl sind, insbesondere den Schmiermittelablauf 12 enthalten. Das Lagergehäuse 20 dient insbesondere der Fernhaltung des Dampfes von der Lageranordnung 2. Durch das Lagergehäuse 20 hindurch ist eine Luftzuführung 22 geführt, welche außerhalb des Lagergehäuses 20 in der Umgebung der Dichtung 7 mündet. Die Luftzuführung 22 ist durch einen weiteren Träger 28a geführt. Das Lagergehäuse 20 ist an eine Öldunstabsaugung 21 angeschlossen, so dass stets ein leichter Unterdruck im Lagergehäuse 20 herrscht. Die Dichtung 7 ist eine näher in FIG 2 dargestellte berührungslose Wellendichtung mit einem Dichtungsgehäuse 6, die den Austritt von Dampf bzw. den Eintritt von Luft und den Austritt von Schmiermittel 8, insbesondere Öl bzw. Öldunst, verhindert. Außerhalb des Lagergehäuses 20 sind zwischen der Dichtung 7 und dem die Laufschaufeln 24 tragenden Teil der Turbinenwelle 4, die nicht näher dargestellten Absaugungen und Dampfzuführungen für Wrasendampf und Sperrdampf vorgesehen.

Zur Abführung von in die Dichtung 7 eingedrungenem Schmiermittel 8 ist an die Dichtung 7 eine Absaugleitung 17 angeschlossen, welche in dem Schmiermittelsumpfraum 11 durch den mit Schmiermittel 8 gefüllten Bereich 19 geführt ist und mit einem Krümmer 26 im wesentlichen vertikal in den Schmiermittelablauf 12 einmündet. Hierdurch wird der Querschnitt 18 des Schmiermittelablaufes 12 verringert, wodurch ein zusätzlicher Unterdruck entsteht. Der Sammelraum 10 mit dem daran angeordneten Umlenkkanal 25 und die Dichtung 7 mit der daran angeschlossenen Absaugleitung 17 sind Teil der Einrichtung 1 zur beschleunigten Abführung von Schmiermittel 8.

Das Lageröl 8 tritt an den Enden 9a, 9b des Lagers 5 eines Gleitlagers aus und hat in Folge der Rotation der Turbinenwelle 4 eine hohe Geschwindigkeit in Umfangsrichtung. In dem Sammelraum 10 wird das Lageröl 8 aufgefangen und durch den Umlenkbogen 25 in den Schmiermittelablauf 12 geleitet. Diese Anordnung aus Sammelraum 10, Umlenkbogen 25 und Schmiermittelablauf 12 wirkt wie ein Injektor und beschleunigt das an dem zweiten Ende 9b austretende Lageröl 8, welches direkt in den Schmiermittelsumpfraum 11 geleitet wird und dort als Ölsumpf ansteht. Die hierdurch mit geringem apparativen Aufwand gebildete Abführung für Schmiermittel 8, Lageröl, funktioniert unabhängig von der Ölabsaugung 21 alleine durch die Rotation der Turbinenwelle 4.

In FIG 2 ist die Dichtung 7 gemäß FIG 1 in einem vergrößerten Maßstab dargestellt. Die Dichtung 7 hat ein Dichtungsgehäuse 6, an dem entlang der Turbinenwelle 4 das Dichtungsgehäuse 6 umringend eine Mehrzahl von Dichtungsbändern 15 angeordnet sind. Bei der Dichtung 7 handelt es sich um eine berührungslose Lippendichtung. Zwischen jeweils benachbarten Dichtungsbändern 15 ist ein jeweiliger Zwischenraum 14 gebildet. Das Dichtungsgehäuse 6 weist einen Absaugraum 13 auf, welcher durch eine jeweilige Stichbohrung 23 mit einer Mehrzahl der Zwischenräume 14 verbunden ist. Der Absaugraum 13 weist eine Bohrung 16 oder eine Mehrzahl an Bohrungen 16 auf, die jeweils in axialer Richtung parallel zur Achse 3 in das Dichtungsgehäuse 6 eingebracht sind. An eine jeweilige Bohrung 16 schließt sich die bereits beschriebene Absaugleitung 17 an. Selbstverständlich ist es ebenfalls möglich, bei einer Mehrzahl von Bohrungen 16 diese an einen gemeinsamen Kanal anzuschließen, an welchem Kanal dann die Absaugleitung 17 angeschlossen ist.

Mit dem unmittelbar in das Dichtungsgehäuse 6 eingebrachten und mit den Zwischenräumen 14 strömungstechnisch verbundenen Absaugraum 13 ist eine Absaugung von Schmiermittel 8, insbesondere Lecköl, das in die Dichtung 7 eingedrungen ist, gewährleistet. Hierdurch wird wirksam verhindert, dass von dem Lager 5 in Richtung der Luftzuführung 22 ein sukzessives Auffüllen der Zwischenräume 14 mit einem letztendlichen Austritt des Schmiermittels 8 aus dem Lagergehäuse 20 heraus verhindert ist. Durch die Bohrung 16 im Dichtungsgehäuse 6 wird das Schmiermittel 8 aus den Zwischenräumen 14 über die Absaugleitung 17 in den Schmiermittelablauf 12 geleitet. Durch ein Einmünden der Absaugleitung 17 im Bereich des Umlenkbogens 25 in den Schmiermittelabfluss 12, erfolgt eine Querschnittsverengung, durch die örtlich ein zusätzlicher Unterdruck erzeugt wird. Durch diesen Unterdruck wird das in die Dichtung 7 eingedrungene Schmiermittel 8 nicht nur in Folge der Gravitationswirkung, sondern durch eine gezielte Absaugung abgeführt. Diese Absaugung wird durch den als Injektor wirkendes Sammelraum 10 mit Umlenkbogen 25 weiter begünstigt. Die Absaugung ist unabhängig von der Öldunstabsaugung 21 funktionsfähig und trägt somit zu einer zusätzlichen Sicherheit gegen Ölaustritt aus einem Gleitlager 5 in einen Abdampfraum einer Dampfturbine bei.

## Patentansprüche

1. Einrichtung (1) zur Abführung eines flüssigen Schmiermittels (8) aus einer Lageranordnung (2) für eine um eine Achse (3) rotierende Welle (4), welche Lageranordnung (2) ein mit dem Schmiermittel (8) zu beaufschlagendes, die Welle (4) lagerndes Lager (5), zumindest eine dem Lager (5) benachbarte die Welle (4) umringende Dichtung (7), und einen einem ersten Ende (9a) des Lagers (5) zugeordneten, die Welle umringenden Sammelraum (10) aufweist, durch welchen Sammelraum (10) das an dem ersten Ende (9a) ausgetretene Schmiermittel (8) auffangbar und ableitbar ist, wobei geodätisch unterhalb des Lagers (5) ein Schmiermittelsumpfraum (11) vorgesehen ist, welcher mit einem Schmiermittelablauf (12) verbunden ist, und der Sammelraum (10) einen durch den Schmiermittelsumpfraum (11) zu dem Schmiermittelablauf (12) führenden Umlenkkanal (25) zur beschleunigten Ableitung des Schmiermittels (8) aufweist,
**dadurch gekennzeichnet, dass**
die Dichtung (7) ein Dichtungsgehäuse (6), in dem ein Absaugraum (13) vorgesehen ist, und zumindest zwei einen Zwischenraum (14) bildende die Welle (4) umringende Dichtungsbänder (15) aufweist, welcher Zwischenraum (14) strömungstechnisch mit dem Absaugraum (13) verbunden ist, wobei der Absaugraum (13) mit einer Absaugleitung (17) verbunden ist, welche durch den Schmiermittelsumpfraum (11) führt und in den Schmiermittelablauf (12) mündet, wobei der Querschnitt (18) des Schmiermittelablaufs (12) durch die Absaugleitungen (17) verengt ist.

2. Einrichtung (1) nach Anspruch 1,
bei der das zweite Ende (9b) des Lagers (5) dem ersten Ende (9a) entlang der Achse (3) gegenüber liegt und für eine unmittelbare Strömung des Schmiermittels (8) in den Schmiermittelsumpfraum (11) mit diesem strömungstechnisch in Verbindung steht.

3. Einrichtung (1) nach Anspruch 2,
bei der ein weiterer dem zweiten Ende (9b) benachbarter Sammelraum (10a) zur Aufnahme und Ableitung von aus dem zweiten Ende (9b) austretendem Schmiermittel (8) vorgesehen ist.

4. Einrichtung (1) nach einem der vorhergehenden Ansprüche, bei der das Lager (5) zwischen der Dichtung (7) und dem Sammelraum (10) angeordnet ist.

5. Einrichtung (1) nach Anspruch 1,
bei der der Absaugraum (13) eine in das Dichtungsgehäuse (6) eingebrachte Bohrung (16) aufweist.

6. Einrichtung (1) nach einem der vorhergehenden Ansprüche in einer Dampfturbinenanlage,
wobei die Lageranordnung (2) ein Stirnlager (5a) umfasst.

7. Verfahren zur Abführung eines flüssigen Schmiermittels (8) aus einer Lageranordnung (2) für eine um eine Achse (3) rotierende Welle (4), welche Lageranordnung (2) ein mit dem Schmiermittel (8) beaufschlagte, die Welle (4) lagerndes Lager (5), zumindest eine dem Lager (5) benachbarte die Welle (4) umringende Dichtung (7), und einen einem ersten Ende (9a) des Lagers (5) zugeordneten, die Welle umringenden Sammelraum (10) aufweist, durch welchen Sammelraum (10) das an dem ersten Ende (9a) austretende Schmiermittel (8) aufgefangen und abgeleitet wird, wobei das aus dem Sammelraum (10) über einen durch einen geodätisch unterhalb des Lagers (5) liegenden Schmiermittelsumpfraum (11) führenden Umlenkkanal (25) das Schmiermittel (8) einem Schmiermittelablauf (12) beschleunigt zugeführt wird,
**dadurch gekennzeichnet, dass**
das Schmiermittel (8) aus einem zwischen zwei Dichtungsbändern (15) der Dichtung (7) gebildeten Zwischenraum (14) in den Absaugraum (13) und von dort über eine durch den Schmiermittelsumpfraum (11) führende Absaugleitung (17) in den Schmiermittelablauf (12) geleitet wird.

8. Verfahren nach Anspruch 7,
**dadurch gekennzeichnet, dass**
aus einem dem ersten Ende (9a) entlang der Achse (3) gegenüberliegenden zweiten Ende (9b) austretende Schmiermittel (8) unmittelbar dem Schmiermittelsumpfraum (11) zugeführt wird, so dass der Umlenkkanal (25) in einen von Schmiermittel (8) gefüllten Bereich (19) des Schmiermittelsumpfraums (11) mündet.

## Claims

1. Device (1) for discharging a liquid lubricant (8) from a bearing arrangement (2) for a shaft (4) rotating about an axis (3), the said bearing arrangement (2) having a bearing (5) to be acted upon by the lubricant (8) and supporting the shaft (4), at least one seal (7) adjacent to the bearing (5) and encircling the shaft (4), and a collecting space (10) which is assigned to a first end (9a) of the bearing (5) and encircles the shaft and by means of which the lubricant (8) which has emerged at the first end (9a) can be intercepted and discharged, there being provided below the bearing (5) in geodetic terms a lubricant sump space (11) which is connected to a lubricant outflow (12), and the collecting space (10) having a deflecting duct (25), leading through the lubricant sump space (11) to the lubricant outflow (12), for the accelerated discharge of the lubricant (8), **characterized in that** the seal (7) has a seal housing (6), in which a suction-extraction space (13) is provided, and at least two sealing strips (15) forming an interspace (14) and encircling the shaft (4), the said interspace (14) being flow-connected to the suction-extraction space (13), the suction-extraction space (13) being connected to a suction-extraction line (17) which leads through the lubricant sump space (11) and issues into the lubricant outflow (12), and the cross section (18) of the lubricant outflow (12) being narrowed by the suction-extraction lines (17).

2. Device (1) according to Claim 1, in which the second end (9b) of the bearing (5) is located opposite the first end (9a) along the axis (3) and, for a direct flow of the lubricant (8) into the lubricant sump space (11), is flow-connected to the latter.

3. Device (1) according to Claim 2, in which a further collecting space (10a), adjacent to the second end (9b), is provided for the reception and discharge of lubricant (8) emerging from the second end (9b).

4. Device (1) according to one of the preceding claims, in which the bearing (5) is arranged between the seal (7) and the collecting space (10).

5. Device (1) according to Claim 1, in which the suction-extraction space (13) has a bore (16) introduced into the seal housing (6).

6. Device (1) according to one of the preceding claims, in a steam turbine plant, the bearing arrangement (2) comprising an end bearing (5a).

7. Method for discharging a liquid lubricant (8) from a bearing arrangement (2) for a shaft (4) rotating about an axis (3), the said bearing arrangement (2) having a bearing (5) acted upon by the lubricant (8) and supporting the shaft (4), at least one seal (7) adjacent to the bearing (5) and encircling the shaft (4), and a collecting space (10) which is assigned to a first end (9a) of the bearing (5) and encircles the shaft and by means of which the lubricant (8) emerging at the first end (9a) is intercepted and discharged, the lubricant (8) being supplied in an accelerated manner to a lubricant outflow (12) from the collecting space (10) via a deflecting duct (25) leading through a lubricant sump space (11) lying below the bearing (5) in geodetic terms, **characterized in that** the lubricant (8) is led out of an interspace (14) formed between two sealing strips (15) of the seal (7) into the suction-extraction space (13) and from there, via a suction-extraction line (17) leading through the lubricant sump space (11), into the lubricant outflow (12).

8. Method according to Claim 7, **characterized in that** lubricant (8) emerging from a second end (9b) located opposite the first end (9a) along the axis (3) is supplied directly to the lubricant sump space (11), so that the deflecting duct (25) issues into a region (19) filled with lubricant (8) of the lubricant sump space (11).

## Revendications

1. Dispositif (1) pour évacuer un lubrifiant (8) liquide d'un ensemble (2) de palier pour un arbre (4) tournant autour d'un axe (3), lequel ensemble (2) de palier comporte un palier (5) à alimenter en lubrifiant (8), servant au montage de l'arbre (4), au moins un joint (7) d'étanchéité entourant annulairement l'arbre (4) au voisinage du palier (5), et une chambre (10) collectrice entourant annulairement l'arbre, et associée à une première extrémité (9a) du palier (5), chambre (10) collectrice par laquelle le lubrifiant (8) sortant à la première extrémité (9a) peut être recueilli et évacué, une chambre (11) formant carter inférieur de lubrifiant étant prévue géodésiquement en dessous du palier (5), chambre qui est reliée à une évacuation (12) de lubrifiant, et la chambre (10) collectrice comportant un canal (25) de déviation menant en passant par la chambre (11) formant carter inférieur de lubrifiant à l'évacuation (12) de lubrifiant, afin d'accélérer l'évacuation du lubrifiant (8),
**caractérisé en ce que** le joint (7) d'étanchéité comprend une boîte (6) de joint d'étanchéité, dans laquelle est prévue une chambre (13) d'aspiration, et au moins deux bandes (15) d'étanchéité entourant annulairement l'arbre (4) en formant un espace (14) intermédiaire, lequel espace (14) intermédiaire est fluidiquement relié à la chambre (13) d'aspiration, la chambre (13) d'aspiration étant reliée à une conduite (17) d'aspiration qui passe dans la chambre (11) formant carter inférieur de lubrifiant et débouche dans l'évacuation (12) de lubrifiant, la section (18) transversale de l'évacuation (12) de lubrifiant étant rétrécie par les conduites (17) d'aspiration.

2. Dispositif (1) suivant la revendication 1,
dans lequel la deuxième extrémité (9b) du palier (5) fait face à la première extrémité (9a) le long de l'axe (3) et est fluidiquement reliée à la chambre (11) formant carter inférieur de lubrifiant, pour un écoulement direct du lubrifiant (8) dans cette chambre.

3. Dispositif (1) suivant la revendication 2,
dans lequel il est prévu une chambre (10a) collectrice supplémentaire, voisine de la deuxième extrémité (9b), pour recevoir et évacuer le lubrifiant (8) sortant de la deuxième extrémité (9b).

4. Dispositif (1) suivant l'une des revendications précédentes,
dans lequel le palier (5) est disposé entre le joint (7) d'étanchéité et la chambre (10) collectrice.

5. Dispositif (1) suivant la revendication 1,
dans lequel la chambre (13) d'aspiration comporte un perçage (16) pratiqué dans la boîte (6) de joint d'étanchéité.

6. Dispositif (1) suivant l'une des revendications précédentes dans une installation à turbine à vapeur,
l'ensemble (2) de palier comprenant un palier (5a) frontal.

7. Procédé pour évacuer un lubrifiant (8) liquide d'un ensemble (2) de palier pour un arbre (4) tournant autour d'un axe (3), lequel ensemble (2) de palier comporte un palier (5) alimenté en lubrifiant (8), et servant au montage de l'arbre (4), au moins un joint (7) d'étanchéité entourant annulairement l'arbre (4) au voisinage du palier (5), et une chambre (10) collectrice entourant annulairement l'arbre, et associée à une première extrémité (9a) du palier (5), chambre (10) collectrice par laquelle le lubrifiant (8) sortant à la première extrémité (9a) est recueilli et évacué, le lubrifiant (8) étant évacué de façon accélérée de la chambre (10) collectrice vers une évacuation (12) de lubrifiant par l'intermédiaire d'un canal (25) de déviation passant dans une chambre (11) formant carter inférieur de lubrifiant, située géodésiquement en dessous du palier (5),
**caractérisé en ce que** le lubrifiant (8) est dirigé dans la chambre (13) d'aspiration à partir d'un espace (14) intermédiaire formé entre deux bandes (15) d'étanchéité du joint (7) d'étanchéité, et de là dans l'évacuation (12) de lubrifiant par l'intermédiaire d'une conduite (17) d'aspiration passant dans la chambre (11) formant carter inférieur de lubrifiant.

8. Dispositif suivant la revendication 7, **caractérisé en ce que** le lubrifiant (8) sortant d'une deuxième extrémité (9b) faisant face à la première extrémité (9a) le long de l'axe (3) est directement apporté à la chambre (11) formant carter inférieur de lubrifiant, de sorte que le canal (25) de déviation débouche dans une région (19) de la chambre (11) formant carter inférieur de lubrifiant qui est remplie de lubrifiant (8).
